# FASCICULE DE BREVET EUROPEEN

(11) **EP 1 387 719 B1**
(45) Date de publication et mention de la délivrance du brevet: **15.11.2006**
(21) Numéro de dépôt: 02735525.4
(22) Date de dépôt: 30.04.2002
(51) Int. Cl.: A63F 13/12

(54) **PROCEDE DE GESTION DE JEU DE PARI SUR UNE COMBINAISON GAGNANTE**
VERFAHREN ZUM SPIELEN EINES WETTSPIELS AUF GEWINNZAHLEN
METHOD FOR MANAGING A GAME FOR BETTING ON A WINNING COMBINATION

(30) Priorité: 03.05.2001 FR 0105922
(43) Date de publication de la demande: 11.02.2004
(73) Titulaire: Thomson Licensing, 92100 Boulogne-Billancourt (FR)
(72) Inventeur: LAURENT, Christophe Thomson Multimedia, F-35630 Vignoc (FR); LION, Stéphanie Thomson Multimedia, F-67000 Strasbourg (FR); TANG-TALPIN, Yan-Mei Thomson Multimedia, F-35700 Rennes (FR)
(74) Mandataire: Berthier, Karine
(86) Numéro de dépôt international: PCT/FR2002/001493
(87) Numéro de publication internationale: WO 2002/089938

(56) Documents cités:
- WO-A-00/79467

## Description

### Domaine de l'invention

La présente invention concerne un procédé de gestion de jeu de pari sur au moins une combinaison gagnante, entre un centre de gestion de jeu et au moins un terminal de jeu distant.

Plus précisément, l'invention concerne un procédé de gestion de jeu du type comportant une étape de choix, à partir du terminal de jeu, d'une combinaison d'éléments d'un premier ensemble d'éléments proposés.

### Etat de la technique

Généralement, dans un tel procédé, il est nécessaire qu'un joueur ait transmis la combinaison d'éléments choisis parmi les éléments du premier ensemble au centre de gestion de jeu, avant que celui-ci n'ait diffusé la combinaison gagnante d'éléments tirés au sort parmi les éléments du premier ensemble.

Or, les échanges entre le centre de gestion de jeu et le terminal distant imposent des délais de transmission dont il faut tenir compte.

Les solutions classiques apportées à ce problème consistent à valider de façon sécurisée l'instant de saisie sur le terminal de la combinaison choisie par le joueur. Cependant, ces solutions deviennent difficiles à mettre en oeuvre et coûteuses, dès lors que l'on souhaite les appliquer à un environnement où chaque joueur peut échanger des données avec le centre de gestion de jeu, à partir d'un terminal personnel tel qu'un micro-ordinateur.

### Exposé de l'invention

L'invention vise à remédier aux inconvénients d'un procédé de gestion de jeu classique.

L'invention a donc pour objet, selon un premier aspect, un procédé de gestion de jeu de pari sur au moins une combinaison gagnante, entre un centre de gestion de jeu et au moins un terminal de jeu distant, ce procédé comportant des étapes consistant, pour le terminal de jeu : à présenter un premier ensemble d'éléments à un joueur ; à constituer une combinaison d'éléments dudit premier ensemble d'éléments proposés en fonction d'un choix effectué par ledit joueur et à masquer ladite combinaison ; à transmettre ladite combinaison masquée au centre de gestion de jeu ; et à recevoir dudit centre de gestion de jeu un ticket de jeu contenant un tableau de correspondance entre chaque élément du premier ensemble et chaque élément d'un second ensemble d'éléments, différent du premier ensemble ; la combinaison gagnante du jeu étant sélectionnée parmi les éléments du second ensemble.

L'invention a également pour objet, selon un second aspect, un procédé de gestion de jeu de pari sur au moins une combinaison gagnante, entre un centre de gestion de jeu et au moins un terminal de jeu distant, ce procédé comportant des étapes consistant, pour le centre de gestion de jeu : à recevoir dudit terminal de jeu, sous forme masquée, une combinaison d'éléments choisis par un joueur parmi un premier ensemble d'éléments ; à générer un ticket de jeu contenant un tableau de correspondance entre chaque élément du premier ensemble et chaque élément d'un second ensemble d'éléments, différent du premier ensemble ; et à transmettre ledit ticket de jeu audit terminal de ; la combinaison gagnante du jeu étant sélectionnée parmi les éléments du second ensemble.

Ainsi, le procédé de gestion de jeu selon l'invention permet d'effectuer l'étape de choix, même si la combinaison gagnante est déjà diffusée. En effet, le choix, éventuellement effectué par un joueur, est extrait d'un ensemble d'éléments différent de l'ensemble d'éléments dont est extraite la combinaison gagnante. Seule l'association du tableau de correspondance à la combinaison choisie par le joueur permet de savoir si cette combinaison choisie correspond à la combinaison gagnante. Il suffit donc que le joueur ne connaisse pas le tableau de correspondance au moment où il effectue son choix.

Le procédé de gestion de jeu selon l'invention peut en outre comporter l'une
ou plusieurs des caractéristiques suivantes :
- on détermine si la combinaison choisie correspond à la combinaison gagnante en associant cette combinaison choisie au tableau de correspondance ;
- le tableau de correspondance est associé de manière unique à la combinaison choisie ;
- les premier et second ensembles comportent le même nombre d'éléments ;
- le centre de gestion de jeu et le terminal de jeu distant sont reliés entre eux par au moins une voie de communication bidirectionnelle;
- la combinaison transmise par le terminal de jeu distant et reçue par le centre de gestion de jeu est cryptée par le terminal de jeu distant avant sa transmission ;
- l'étape de génération du ticket de jeu comporte la génération d'un identifiant unique du ticket de jeu associé au tableau de correspondance ;
- l'étape de transmission du ticket de jeu comporte les étapes suivantes :
   - la génération d'un message comprenant la combinaison choisie et le ticket de jeu,
   - la génération d'une signature d'au moins une partie de ce message, et
   - la transmission d'un reçu, comportant le message et la signature ;
- le message généré lors de l'étape de transmission du ticket de jeu contient la combinaison choisie cryptée ;
- lors de l'étape de transmission du ticket de jeu, le message généré comprend en outre un identifiant du centre de gestion de jeu ;
- le procédé comporte en outre une étape de transmission, par le terminal de jeu, d'une preuve de gain du joueur au centre de gestion de jeu, en cas de concordance entre, d'une part, la combinaison gagnante et, d'autre part, la combinaison choisie et le tableau de correspondance ;
- la preuve de gain comporte le reçu ;
- le terminal de jeu génère une clé secrète symétrique connue de lui seul, et :
   - lors de l'étape de transmission de la combinaison choisie, celle-ci est cryptée à l'aide de la clé secrète symétrique, et
   - la preuve de gain comporte la clé secrète symétrique ;
- le centre de gestion de jeu comporte une clé privée connue de lui seul associée à une clé publique connue du terminal de jeu, et lors de l'étape de transmission de la preuve de gain, celle-ci est cryptée à l'aide de la clé publique; et
- la signature est générée par le centre de gestion de jeu à l'aide de la clé privée ;
- le second ensemble comporte une pluralité de combinaisons gagnantes.

### Brève description des dessins

L'invention sera mieux comprise à la lecture de la description qui va suivre, donnée uniquement à titre d'exemple et faite en se référant aux dessins annexés sur lesquels :
- la figure 1 représente un environnement de mise en oeuvre d'un procédé de gestion de jeu selon l'invention ; et
- la figure 2 représente les étapes du procédé de gestion de jeu selon l'invention mis en oeuvre dans l'environnement de la figure 1.

### Description détaillée d'un mode de réalisation de l'invention

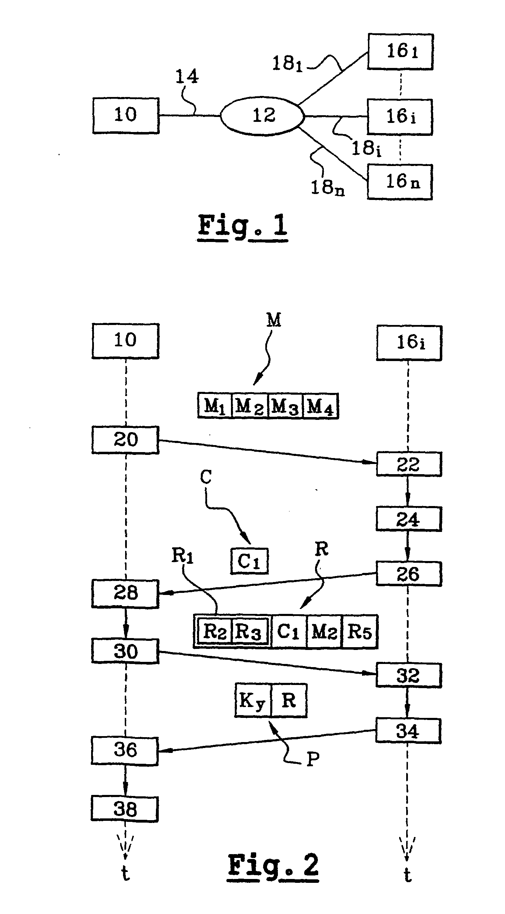

L'environnement représenté à la figure 1 comporte un centre 10 de gestion de jeu, localisé par exemple chez un organisateur de jeux et comportant un serveur dans lequel est exécutée une application de jeu. II est relié à un réseau 12 de transmission d'informations, tel qu'Internet, au moyen d'une liaison bidirectionnelle 14.

D'autre part, des terminaux de jeux distants 16₁, ..., 16ₙ sont également reliés au réseau Internet 12 au moyen de liaisons bidirectionnelles 18₁, ..., 18ₙ. Ces terminaux de jeux distants 16₁, ..., 16ₙ sont par exemple constitués d'ordinateurs personnels localisés chez des joueurs.

On a représenté sur la figure 2 les étapes du procédé de gestion de jeu selon l'invention, mis en oeuvre entre le centre de gestion de jeu 10 et un terminal de jeu 16ᵢ quelconque, choisi parmi les terminaux 16₁, ..., 16ₙ.

Lors d'une première étape 20, le centre de gestion de jeu 10 transmet un message d'authentification M au terminal de jeu 16ᵢ.

Ce message M comporte un numéro d'identification de jeu M₁, différent pour chaque jeu. Dans cet exemple, chaque jeu comporte une unique combinaison gagnante, de sorte que le numéro d'identification de jeu M₁ est différent pour chaque combinaison gagnante.

De manière optionnelle, le centre de gestion de jeu 10 peut également envoyer dans le message M des éléments d'authentification permettant au terminal de jeu distant 16ᵢ de vérifier que ce message M provient d'un centre de gestion de jeu agréé par une autorité de certification et n'a pas été altéré durant la transmission.

Pour cela, le message M contient préférentiellement un numéro M₂ d'identification du centre 10 de gestion de jeu, ce numéro lui étant attribué par l'autorité de certification de façon unique.

L'autorité de certification attribue également au centre 10 de gestion de jeu un certificat M₃ qui permet d'associer de manière sécurisée le numéro M₂ d'identification du centre 10 de gestion de jeu et une clé publique PK_{GP}, selon la relation suivante :
M₃ = Cert (M₂, PK_{GP}), où Cert est une fonction classique.

En effet, un moyen bien connu de sécuriser la transmission d'informations entre le centre 10 de gestion de jeu et les terminaux de jeu distants 16₁, ..., 16ₙ est d'utiliser un procédé de cryptographie à clé publique dans lequel le centre 10 de gestion de jeu possède une clé privée SK_{GP} qui n'est connue que de lui et une clé publique PK_{GP} qui est connue des terminaux distants. L'autorité de certification elle-même possède une clé privée avec laquelle elle signe le certificat M₃ et une clé publique, qui est connue des terminaux de jeux distants, comme on le verra plus loin, pour leur permettre de vérifier la validité des certificats.

Le certificat M₃ est de préférence établi selon la norme ITU-T, recommandation X.509/ISO/IEC 9594-8 à laquelle on pourra se référer pour plus de détails.

Enfin, le message M comporte une signature M₄, qui est un message crypté, par exemple par une fonction de hachage, avec la clé privée SK_{GP}, comportant le numéro d'identification du jeu M₁ et le numéro M₂ d'identification du centre de gestion de jeu.

Lors de l'étape 22 suivante, le terminal de jeu distant 16ᵢ vérifie le message d'authentification M.

Pour cela, il comporte la clé publique de l'autorité de certification, grâce à laquelle il vérifie le contenu du certificat M₃ et récupère ainsi la clé publique PK_{GP} du centre 10 de gestion de jeu.

Il vérifie également que le numéro M₂ d'identification du centre 10 de gestion de jeu correspond bien à celui présent dans le certificat M₃. Enfin, à l'aide de la clé publique PK_{GP}, le terminal de jeu distant 16ⱼ vérifie que la signature M₄ correspond bien au contenu du message M.

Ensuite, lors d'une étape de choix 24, le joueur choisit, à partir du terminal de jeu 16ᵢ, une combinaison C₁ d'éléments d'un premier ensemble d'éléments proposés. Par exemple, l'ensemble d'éléments proposés est présenté à l'écran du terminal de jeu 16ᵢ sous la forme d'une grille comportant p cases, parmi lesquelles le joueur doit en cocher k.

Lors d'une étape 26, le terminal de jeu 16ᵢ va procéder au masquage de la combinaison choisie, cette combinaison C₁ étant constituée des k cases cochées par le joueur. Pour cela, selon un mode de réalisation préférentiel, le terminal de jeu 16ᵢ génère automatiquement de façon classique une clé secrète symétrique K_{y} inconnue du centre 10 de gestion de jeu. Il effectue ensuite le cryptage de la combinaison choisie C₁ à l'aide de la clé secrète symétrique K_{y}, préférentiellement selon le standard DES (Data Encryption Standard) pour obtenir une combinaison C₁ masquée (la combinaison C₁ cryptée à l'aide de K_{y}).

Enfin, le terminal de jeu 16ᵢ transmet la combinaison masquée sous forme d'un message C.

Lors de l'étape 28 suivante, à la réception de ce message C contenant la combinaison choisie cryptée, le centre 10 de gestion de jeu crée un ticket de jeu R₁, comprenant d'une part un identifiant unique de ticket R₂ et d'autre part un tableau de correspondance R₃.

Le tableau R₃ établit la correspondance entre les éléments du premier ensemble, c'est-à-dire les p cases, et les éléments d'un second ensemble, tel que par exemple l'ensemble des p premiers nombres entiers naturels non nuls. Ce tableau est généré aléatoirement par l'affectation à chacune des p cases de l'un des p nombres entiers du second ensemble, chaque case étant associée à un nombre entier différent.

La génération aléatoire du tableau de correspondance R₃ est consécutive de la réception du message C. Ainsi, le centre 10 de gestion de jeu génère autant de tableaux de correspondance R₃ que le nombre de messages C qu'il reçoit en provenance des différents terminaux de jeu distants 16₁, ..., 16ₙ. Le tableau de correspondance R₃ est donc associé de manière unique à la combinaison choisie C₁.

Par ailleurs, une combinaison gagnante unique pour le jeu est sélectionnée parmi toutes les combinaisons possibles de k nombres parmi les p nombres entiers du second ensemble. L'étape de sélection de la combinaison gagnante, pouvant être effectuée à n'importe quel moment du procédé, n'est pas représentée sur la figure 2. Cette étape est, par exemple, effectuée par le centre 10 de gestion de jeu.

Lors de l'étape 30 suivante, le centre 10 de gestion de jeu transmet un reçu R au terminal de jeu distant 16ᵢ.

Ce reçu R comporte le ticket R₁, la combinaison choisie C₁ masquée (dans notre exemple il s'agit de la combinaison C₁ cryptée par la clé K_{y}), le numéro M₂ d'identification du jeu, ainsi qu'une signature R₅ comportant le ticket R₁, cryptée au moyen de la clé privée SK_{GP}.

Lors d'une étape 32, le terminal de jeu 16ᵢ reçoit le message R. Il vérifie ensuite à l'aide de la clé publique asymétrique PK_{GP} que la signature R₅ est conforme aux informations R₁, C₁, M₂ contenues dans le message R.

Il présente ensuite au joueur, sur son écran, le tableau de correspondance R₃ contenu dans le ticket de jeu R₁. Ce tableau de correspondance R₃ est par exemple présenté sous la forme d'une grille de p cases, similaire à la grille présentée au joueur à l'étape 24, mais dont chaque case comporte le nombre qui lui a été affecté à l'étape 28.

Ainsi, à partir de la combinaison C₁ et de cette nouvelle grille qui lui est présentée, !e joueur peut en déduire la combinaison d'éléments qu'il a choisis parmi les éléments du second ensemble d'éléments. Dès lors, connaissant la combinaison gagnante, il sait s'il a gagné au jeu ou non.

S'il a gagné, lors d'une étape 34, il transmet au centre 10 de gestion de jeu une preuve de gain P comprenant un élément pour démasquer la combinaison masquée transmise dans le reçu R (dans notre exemple, il s'agit de la clé secrète symétrique K_{y}) et le reçu R. Cette preuve de gain est transmise au centre 10 de gestion de jeu sous forme cryptée, à l'aide de la clé publique asymétrique PK_{GP} du centre de gestion de jeu 10.

Lors de l'étape 36 suivante, le centre 10 de gestion de jeu décrypte la combinaison C₁ cryptée contenue dans le reçu R, à l'aide de la clé secrète symétrique K_{y} qui vient de lui être transmise.

Enfin, lors d'une dernière étape 38, le centre 10 de gestion de jeu transmet par exemple un certificat de gain du prix au terminal de jeu 16ᵢ pour permettre au joueur de recevoir son prix sur présentation de ce certificat.

Tout moyen approprié pourra être mis en oeuvre pour remettre le prix au gagnant.

Il apparaît clairement que le procédé de gestion de jeu selon l'invention permet la mise en oeuvre simple de la gestion d'un jeu de pari sur une combinaison gagnante, en se libérant de la contrainte de synchronisation entre l'étape de choix d'une combinaison effectué par le joueur et la diffusion de la combinaison gagnante.

Un autre avantage du procédé précédemment décrit est de permettre au joueur d'être certain que le centre 10 de gestion de jeu ne peut pas influer sur la sélection de la combinaison gagnante en fonction de la combinaison choisie C₁, en masquant celle-ci (en la cryptant à l'aide de la clé secrète symétrique K_{y)} avant de la transmettre au centre de gestion de jeu lors de l'étape de transmission 26.

Un autre avantage du procédé précédemment décrit est de permettre au joueur d'être certain d'être le seul à pouvoir recevoir son prix en cas de gain, la clé secrète symétrique K_{y} n'étant connue de personne d'autre que lui et le centre 10 de gestion de jeu.

Enfin, on notera que l'invention n'est pas limitée au mode de réalisation décrit précédemment.

En effet, en variante, la combinaison gagnante est sélectionnée par un centre de sélection, distinct du centre 10 de gestion de jeu.

En variante également, le jeu de pari comporte plusieurs combinaisons gagnantes.

En variante également, le centre 10 de gestion de jeu génère un unique tableau de correspondance par jeu.

En variante également, le nombre d'éléments du premier ensemble est supérieur au nombre d'éléments du second ensemble, de sorte que le tableau de correspondance associe parfois plusieurs éléments du premier ensemble à un élément du second ensemble, ce qui augmente les chances de gain pour le joueur.

En variante également, le centre 10 de gestion de jeu est un serveur de diffusion de programmes audiovisuels et les terminaux de jeu distants 16₁, ..., 16ₙ sont des récepteurs de télévision, des décodeurs ou des consoles de jeu munis de moyens d'exécution de l'application de jeu. Dans ce cas, le centre de gestion de jeu et les terminaux sont reliés par un réseau de diffusion mono-directionnel classique ainsi que par le Réseau Téléphonique Commuté ou des lignes numériques spécialisées à haut débit.

Enfin, en variante, lors de l'étape de choix 24, celui-ci peut-être fait de manière automatique et non pas par le joueur.
Bien que selon l'exemple de réalisation, l'identificateur transmis avec le ticket soit celui du centre de gestion, il est également possible de mettre en oeuvre un identificateur du jeu, par exemple dans le cas où plusieurs jeux sont gérés par un même centre de gestion.

## Revendications

1. Procédé de gestion de jeu de pari sur au moins une combinaison gagnante, entre un centre (10) de gestion de jeu et au moins un terminal de jeu distant (16₁, ..., 16ₙ), **caractérisé en ce qu'**il comporte les étapes consistant, pour le terminal de jeu (16₁, ..., 16ₙ) :
- à présenter un premier ensemble d'éléments à un joueur ;
- à constituer une combinaison (C₁) d'éléments dudit premier ensemble d'éléments proposés en fonction d'un choix (24) effectué par ledit joueur et à masquer ladite combinaison ;
- à transmettre (26) ladite combinaison (C₁) masquée au centre de gestion de jeu (10) ; et
- à recevoir dudit centre de gestion de jeu un ticket de jeu (R₁) contenant un tableau (R₃) de correspondance entre chaque élément du premier ensemble et chaque élément d'un second ensemble d'éléments, différent du premier ensemble ;
la combinaison gagnante du jeu étant sélectionnée parmi les éléments du second ensemble.

2. Procédé de gestion de jeu de pari sur au moins une combinaison gagnante, entre un centre (10) de gestion de jeu et au moins un terminal de jeu distant (16₁, ..., 16ₙ), **caractérisé en ce qu'**il comporte les étapes consistant, pour le centre de gestion de jeu (10) :
- à recevoir dudit terminal de jeu, sous forme masquée, une combinaison (C₁) d'éléments choisis par un joueur parmi un premier ensemble d'éléments ;
- à générer (28) un ticket de jeu (R₁) contenant un tableau (R₃) de correspondance entre chaque élément du premier ensemble et chaque élément d'un second ensemble d'éléments, différent du premier ensemble ; et
- à transmettre (30) ledit ticket de jeu (R₁) audit terminal de jeu (16₁, ..., 16ₙ) ;
la combinaison gagnante du jeu étant sélectionnée parmi les éléments du second ensemble.

3. Procédé de gestion de jeu selon l'une des revendications 1 ou 2, **caractérisé en ce que** l'on détermine si la combinaison choisie (C₁) correspond à la combinaison gagnante en associant cette combinaison choisie (C₁) au tableau de correspondance (R₃).

4. Procédé de gestion de jeu selon l'une des revendications 1 à 3, **caractérisé en ce que** le tableau de correspondance (R₃) est associé de manière unique à la combinaison choisie (C₁).

5. Procédé de gestion de jeu selon l'une quelconque des revendications 1 à 4, **caractérisé en ce que** les premier et second ensembles comportent le même nombre d'éléments.

6. Procédé de gestion de jeu selon l'une quelconque des revendications 1 à 5, **caractérisé en ce que** la combinaison transmise par le terminal de jeu distant (16₁, ..., 16ₙ) et reçue par le centre (10) de gestion de jeu est cryptée par le terminal de jeu distant (16₁, ..., 16ₙ) avant sa transmission.

7. Procédé de gestion de jeu selon la revendication 2, **caractérisé en ce que** l'étape (28) de génération du ticket de jeu (R₁) comporte la génération d'un identifiant (R₂) unique du ticket de jeu (R₁) associé au tableau de correspondance (R₃).

8. Procédé de gestion de jeu selon l'une des revendications 2 ou 7, **caractérisé en ce que** l'étape (30) de transmission du ticket de jeu (R₁) comporte les étapes suivantes :
- la génération d'un message comprenant la combinaison choisie (C₁) et le ticket de jeu (R₁) ;
- la génération d'une signature (R₅) d'au moins une partie de ce message ; et
- la transmission d'un reçu (R), comportant le message et la signature (R₅).

9. Procédé de gestion de jeu selon la revendication 8, **caractérisé en ce que** le message contient la combinaison choisie (C₁) cryptée.

10. Procédé de gestion de jeu selon l'une des revendications 8 ou 9, **caractérisé en ce que**, lors de l'étape (30) de transmission du ticket de jeu (R₁), le message généré comprend en outre un identifiant (M₂) du centre (10) de gestion de jeu.

11. Procédé de gestion de jeu selon la revendication 1 ou l'une quelconque des revendications 3 à 6 prises dans leur dépendance de la revendication 1, **caractérisé en ce qu'**il comporte en outre une étape (34) consistant, pour le terminal de jeu (16₁, ..., 16ₙ) à transmettre au centre (10) de gestion de jeu une preuve de gain (P) dudit joueur, en cas de concordance entre, d'une part, la combinaison gagnante et, d'autre part, la combinaison choisie (C₁) et le tableau de correspondance (R₃).

12. Procédé de gestion de jeu selon la revendication 2 ou l'une quelconque des revendications 3 à 10 prises dans leur dépendance de la revendication 2, **caractérisé en ce qu'**il comporte en outre une étape consistant, pour le centre (10) de gestion de jeu à recevoir une preuve de gain (P) dudit joueur, en cas de concordance entre, d'une part, la combinaison gagnante et, d'autre part, la combinaison choisie (C₁) et le tableau de correspondance (R₃).

13. Procédé de gestion de jeu selon les revendications 8 et 11 prises ensemble, **caractérisé en ce que** la preuve de gain (P) comporte le reçu (R).

14. Procédé de gestion de jeu selon la revendication 11, **caractérisé en ce que** le terminal de jeu (16₁, ..., 16ₙ) génère une clé secrète symétrique (K_{y}) connue de lui seul, et **en ce que** :
- lors de l'étape (26) de transmission de la combinaison choisie (C₁), celle-ci est cryptée à l'aide de la clé secrète symétrique (K_{y}) ; et
- la preuve de gain (P) comporte la clé secrète symétrique (K_{y}).

15. Procédé de gestion de jeu selon la revendication 11, **caractérisé en ce que** le centre (10) de gestion de jeu comporte une clé privée (SK_{GP}) connue de lui seul associée à une clé publique (PK_{GP}) connue du terminal de jeu (16₁, ..., 16ₙ), et **en ce que**, lors de l'étape (34) de transmission de la preuve de gain (P), celle-ci est cryptée à l'aide de la clé publique (PK_{GP}).

16. Procédé de gestion de jeu selon la revendication 8 , **caractérisé en ce que** le centre (10) de gestion de jeu comporte une clé privée (SK_{GP}) connue de lui seul associée à une clé publique (PK_{GP}) connue du terminal de jeu (16₁, ..., 16ₙ), et **en ce que** la signature (R₅) est générée par le centre (10) de gestion de jeu à l'aide de la clé privée (SK_{GP}).

17. Procédé selon l'une des revendications précédentes, **caractérisé en ce que** le second ensemble comporte une pluralité de combinaisons gagnantes.

## Claims

1. Method for managing a game for betting on at least one winning combination between a game management center (10) and at least one remote game terminal (16₁, ..., 16ₙ), **characterized in that**, for the game terminal (16₁, ..., 16ₙ), it comprises the following steps:
- presenting a first set of elements to a player;
- making up a combination (C₁) of elements of said first set of proposed elements on the basis of a choice (24) made by said player, and masking said combination;
- transmitting (26) said masked combination (C₁) to the game management center (10); and
- receiving from said game management center a game ticket (R₁) containing a table (R₃) of correspondence between each element of the first set and each element of a second set of elements which differs from the first set;
the winning combination being selected from the elements of the second set.

2. Method for managing a game for betting on at least one winning combination between a game management center (10) and at least one remote game terminal (16₁, ..., 16ₙ), **characterized in that**, for the game management center (10), it comprises the following steps:
- receiving from said game terminal, in masked form, a combination of elements (C₁) chosen by a player from a first set of elements;
- generating (28) a game ticket (R₁) containing a table (R₃) of correspondence between each element of the first set and each element of a second set of elements which differs from the first set; and
- transmitting (30) said game ticket (R₁) to said game terminal (16₁, ..., 16ₙ);
the winning combination being selected from the elements of the second set.

3. Method for managing a game according to one of claims 1 or 2, **characterized in that** it is established whether the chosen combination (C₁) matches the winning combination by associating this chosen combination (C₁) with the correspondence table (R₃).

4. Method for managing a game according to one of claims 1 to 3, **characterized in that** the correspondence table (R₃) is associated in a unique manner with the chosen combination (C₁).

5. Method for managing a game according to any one of claims 1 to 4, **characterized in that** the first and second sets comprise the same number of elements.

6. Method for managing a game according to any one of claims 1 to 5, **characterized in that** the combination transmitted by the remote game terminal (16₁, ..., 16ₙ) and received by the game management center (10) is encrypted by the remote game terminal (16₁, ..., 16ₙ) before its transmission.

7. Method for managing a game according to claim 2, **characterized in that** the step (28) of generation of the game ticket (R₁) comprises the generation of a unique identifier (R₂) of the game ticket (R₁) associated with the correspondence table (R₃).

8. Method for managing a game according to one of claims 2 or 7, **characterized in that** the step (30) of transmission of the game ticket (R₁) comprises the following steps:
- generation of a message comprising the chosen combination (C₁) and the game ticket (R₁);
- generation of a signature (R₅) of at least part of this message; and
- transmission of a receipt (R), comprising the message and the signature (R₅).

9. Method for managing a game according to claim 8, **characterized in that** the message contains the encrypted chosen combination (C₁).

10. Method for managing a game according to one of claims 8 or 9, **characterized in that**, during the step (30) of transmission of the game ticket (R₁), the generated message furthermore comprises an identifier (M₂) of the game management center (10).

11. Method for managing a game according to claim 1 or any one of claims 3 to 6, taken in their dependence on claim 1, **characterized in that** it furthermore comprises a step (34) which, for the game terminal (16₁, ..., 16ₙ), consists in transmitting to the game management center (10) a proof of winning (P) of said player in the event of correspondence between, on the one hand, the winning combination and, on the other hand, the chosen combination (C₁) and the correspondence table (R₃).

12. Method for managing a game according to claim 2 or any one of claims 3 to 10, taken in their dependence on claim 2, **characterized in that** it furthermore comprises a step which, for the game management center (10), consists in receiving a proof of winning (P) from said player in the event of correspondence between, on the one hand, the winning combination and, on the other hand, the chosen combination (C₁) and the correspondence table (R₃).

13. Method for managing a game according to claims 8 and 11, taken together, **characterized in that** the proof of winning (P) comprises the receipt (R).

14. Method for managing a game according to claim 11, **characterized in that** the game terminal (16₁, . , 16ₙ) generates a symmetrical secret key (K_{y}) known to it alone, and **in that**:
- during the step (26) of transmission of the chosen combination (C₁), the latter is encrypted using the symmetrical secret key (K_{y}) ; et
- the proof of winning (P) comprises the symmetrical secret key (K_{y}).

15. Method for managing a game according to claim 11, **characterized in that** the game management center (10) comprises a private key (SK_{GP}) known to it alone and associated with a public key (PK_{GP}) known to the game terminal (16₁, ..., 16ₙ) and **in that**, during the step (34) of the transmission of the proof of winning (P), the latter is encrypted using the public key (PK_{GP}).

16. Method for managing a game according to claim 8, **characterized in that** the game management center (10) comprises a private key (SK_{GP}) known to it alone and associated with a public key (PK_{GP}) known to the game terminal (16₁, ..., 16ₙ) and **in that** the signature (R₅) is generated by the game management center (10) using the private key (SK_{GP}).

17. Method according to one of the preceding claims, **characterized in that** the second set comprises a plurality of winning combinations.

## Patentansprüche

1. Verfahren zur Durchführung eines Wettspiels auf mindestens eine Gewinnkombination zwischen einem Spielverwaltungszentrum (10) und mindestens einem entfernten Spielterminal (16₁, .. , 16ₙ), **dadurch gekennzeichnet, dass** es die Schritte umfasst, die für das Spielterminal (161, ..., 16n) darin bestehen:
- einem Spieler eine erste Menge von Elementen vorzustellen;
- eine Kombination (C1) von Elementen aus der ersten Menge von vorgeschlagenen Elementen in Abhängigkeit einer von dem Spieler getroffenen Wahl (24) zu bilden und die Kombination zu maskieren;
- die maskierte Kombination (C1) an das Spielverwaltungszentrum (10) zu übertragen und
- von dem Spielverwaltungszentrum einen Spielschein (R1) zu empfangen, der eine Tabelle (R3) über die Zuordnung jedes Elements der ersten Menge zu jedem Element einer zweiten, von der ersten Menge unterschiedlichen Elementenmenge enthält,
wobei die Gewinnkombination des Spiels aus den Elementen der zweiten Menge ausgewählt wird.

2. Verfahren zur Durchführung eines Wettspiels auf mindestens eine Gewinnkombination zwischen einem Spielverwaltungszentrum (10) und mindestens einem entfernten Spielterminal (16₁, ..., 16ₙ), **dadurch gekennzeichnet, dass** es die Schritte umfasst, die für das Spielverwaltungszentrum (10) darin bestehen:
- von dem Spielterminal in maskierter Form eine Kombination (C₁) von Elementen zu empfangen, die von einem Spieler aus einer ersten Elementenmenge gewählt werden;
- einen Spielschein (R₁) zu erzeugen (28), der eine Tabelle (R₃) über die Zuordnung jedes Elements der ersten Menge zu jedem Element einer zweiten, von der ersten Menge unterschiedlichen Elementenmenge enthält, und
- den Spielschein (R₁) an das Spielterminal (16₁, ..., 16ₙ) zu übertragen (30),
wobei die Gewinnkombination des Spiels aus den Elementen der zweiten Menge ausgewählt wird.

3. Verfahren zur Durchführung eines Spiels nach einem der Ansprüche 1 oder 2, **dadurch gekennzeichnet, dass** ermittelt wird, ob die gewählte Kombination (C₁) der Gewinnkombination entspricht, indem diese gewählte Kombination (C₁) der Zuordnungstabelle (R₃) zugeordnet wird.

4. Verfahren zur Durchführung eines Spiels nach einem der Ansprüche 1 bis 3, **dadurch gekennzeichnet, dass** die Zuordnungstabelle (R₃) der gewählten Kombination (C₁) eindeutig zugeordnet wird.

5. Verfahren zur Durchführung eines Spiels nach einem der Ansprüche 1 bis 4, **dadurch gekennzeichnet, dass** die erste und die zweite Menge dieselbe Anzahl von Elementen umfassen.

6. Verfahren zur Durchführung eines Spiels nach einem der Ansprüche 1 bis 5, **dadurch gekennzeichnet, dass** die von dem von dem entfernten Spielterminal (16₁, ..., 16ₙ) übertragene und von dem Spielverwaltungszentrum (10) empfangene Kombination von dem entfernten Spielterminal (16₁, ..., 16ₙ) vor ihrer Übertragung verschlüsselt wird.

7. Verfahren zur Durchführung eines Spiels nach Anspruch 2, **dadurch gekennzeichnet, dass** der Schritt (28) der Erzeugung des Spielscheins (R₁) das Erzeugen einer eindeutigen Kennung (R₂) des Spielscheins (R₁), der der Zuordnungstabelle (R₃) zugeordnet ist, umfasst.

8. Verfahren zur Durchführung eines Spiels nach einem der Ansprüche 2 oder 7, **dadurch gekennzeichnet, dass** der Schritt (30) der Übertragung des Spielscheins (R₁) folgende Schritte umfasst:
- Erzeugen einer die gewählte Kombination (C₁) und den Spielschein (R₁) umfassenden Nachricht;
- Erzeugen einer Signatur (R₅) mindestens eines Teils dieser Nachricht und
- Übertragung einer die Nachricht und die Signatur (R₅) umfassenden Quittung (R).

9. Verfahren zur Durchführung eines Spiels nach Anspruch 8, **dadurch gekennzeichnet, dass** die Nachricht die gewählte verschlüsselte Kombination (C₁) enthält.

10. Verfahren zur Durchführung eines Spiels nach einem der Ansprüche 8 oder 9, **dadurch gekennzeichnet, dass** bei dem Schritt (30) der Übertragung des Spielscheins (R₁) die erzeugte Nachricht ferner eine Kennung (M₂) des Spielverwaltungszentrums (10) umfasst.

11. Verfahren zur Durchführung eines Spiels nach Anspruch 1 oder nach einem beliebigen der Ansprüche 3 bis 6, sofern von Anspruch 1 abhängig, **dadurch gekennzeichnet, dass** es ferner einen Schritt (34) umfasst, der für das Spielterminal (16₁, ..., 16ₙ) darin besteht, dem Spielverwaltungszentrum (10) einen Nachweis (P) über den Gewinn des Spielers zu übertragen, falls die Gewinnkombination einerseits und die gewählte Kombination (C₁) und die Zuordnungstabelle (R₃) andererseits übereinstimmen.

12. Verfahren zur Durchführung eines Spiels nach Anspruch 2 oder nach einem beliebigen der Ansprüche 3 bis 10, sofern von Anspruch 2 abhängig, **dadurch gekennzeichnet, dass** es ferner einen Schritt umfasst, der für das Spielverwaltungszentrum (10) darin besteht, einen Nachweis (P) über den Gewinn des Spielers zu empfangen, falls die Gewinnkombination einerseits und die gewählte Kombination (C₁) und die Zuordnungstabelle (R₃) andererseits übereinstimmen.

13. Verfahren zur Durchführung eines Spiels nach Anspruch 8 in Verbindung mit Anspruch 11, **dadurch gekennzeichnet, dass** der Gewinnnachweis (P) die Quittung (R) umfasst.

14. Verfahren zur Durchführung eines Spiels nach Anspruch 11, **dadurch gekennzeichnet, dass** das Spielterminal (16₁, ..., 16ₙ) einen symmetrischen, nur ihm bekannten Geheimschlüssel (K_{y}) erzeugt, und dass
- bei dem Schritt (26) der Übertragung der gewählten Kombination (C₁) diese mit Hilfe des symmetrischen Geheimschlüssels (K_{y}) verschlüsselt wird und
- der Gewinnnachweis (P) den symmetrischen Geheimschlüssel (K_{y}) umfasst.

15. Verfahren zur Durchführung eines Spiels nach Anspruch 11, **dadurch gekennzeichnet, dass** das Spielverwaltungszentrum (10) einen nur ihm bekannten Privatschlüssel (SK_{GP}) aufweist, der einem dem Spielterminal (16₁, ..., 16ₙ) bekannten öffentlichen Schlüssel (PK_{GP}) zugeordnet ist, und dass bei dem Schritt (34) der Übertragung des Gewinnnachweises (P) dieser mit Hilfe des öffentlichen Schlüssels (PK_{GP}) verschlüsselt wird.

16. Verfahren zur Durchführung eines Spiels nach Anspruch 8, **dadurch gekennzeichnet, dass** das Spielverwaltungszentrum (10) einen nur ihm bekannten Privatschlüssel (SK_{GP}) aufweist, der einem dem Spielterminal (16₁, .. , 16ₙ) bekannten öffentlichen Schlüssel (PK_{GP}) zugeordnet ist, und dass die Signatur (R₅) von dem Spielverwaltungszentrum (10) mit Hilfe des Privatschlüssels (SK_{GP}) erzeugt wird.

17. Verfahren nach einem der vorhergehenden Ansprüche, **dadurch gekennzeichnet, dass** die zweite Menge eine Mehrzahl von Gewinnkombinationen umfasst.
